# EUROPÄISCHE PATENTSCHRIFT

(11) **EP 2 344 823 B1**
(45) Veröffentlichungstag und Bekanntmachung des Hinweises auf die Patenterteilung: **26.03.2014**
(21) Anmeldenummer: 09744613.2
(22) Anmeldetag: 28.09.2009
(51) Int. Cl.: C10L 9/08, F26B 17/28

(54) **VORRICHTUNG ZUR BEHANDLUNG EINES PRODUKTES**
DEVICE FOR TREATING A PRODUCT
DISPOSITIF POUR TRAITER UN PRODUIT

(30) Priorität: 29.09.2008 DE 102008049345; 26.02.2009 DE 102009010393
(43) Veröffentlichungstag der Anmeldung: 20.07.2011
(73) Patentinhaber: LIST Holding AG, 4422 Arisdorf (CH)
(72) Erfinder: KUNZ, Alfred, CH-4132 Muttenz (CH); LIECHTI, Pierre, CH-4132 Muttenz (CH); SCHWENK, Walther, CH-4303 Kaiseraugst (CH); STÜTZLE, Bernhard, 68400 Riedisheim (FR)
(74) Vertreter: Weiss, Peter
(86) Internationale Anmeldenummer: PCT/EP2009/006974
(87) Internationale Veröffentlichungsnummer: WO 2010/034518

(56) Entgegenhaltungen:
- EP-A2- 0 240 478
- DE-A1- 10 246 639
- GB-A- 789 439
- US-A- 4 123 332

## Beschreibung

Die vorliegende Erfindung betrifft eine Vorrichtung zur Behandlung eines Produktes, welches in einem Gehäuse von einem Eintrag zu einem Antrag transportierbar ist, insbesondere Torrefaktor zur Durchführung eines Röstprozesses mit einem schwer fliessbaren Produkt, das Nester bildet und keine Wandhaftung hat, wobei Kammern durch scheibenförmige Elemente gebildet sind, die auf einer Welle angeordnet sind.

### Stand der Technik

Viele Produkte müssen einem Behandlungsprozess, beispielsweise einem Röstprozess unterzogen werden. In diesem speziellen Fall wird ein Torrefaktor verwendet. Nach dem Stand der Technik wird das zu röstende Produkt durch ein auf Reibung basierendes Verfahren, z.B. mittels einer Schneckenwelle, im Gehäuse des Torrefaktors durch die verschiedenen Röstkammern transportiert. Das ist vor allem bei schwer fliessbaren und brückenbildenden Produkten, die Nester bilden und keine Wandhaftung haben, problematisch. Bei dem o.g. Verfahren besteht das Problem, dass durch Nestbildung ein gezielter Transport des Produkts verhindert wird. Des Weiteren führt die zwangsläufig bei diesem Verfahren auftretende Kompaktierung und Reibung zu einer nicht zu unterschätzenden Staub- und Abriebbildung. Zusätzlich besteht immer die Gefahr, dass zwischen Gehäuse und Schneckenwelle Klemmstellen für das Produkt entstehen.

Die DE 102 46 639 A1 offenbart hierzu einen Mischer zum kontinuierlichen Mischen und Fördern von Feststoffen und/oder Flüssigkeiten mit einem Gehäuse in Form eines geschlossenen Trogs und mindestens einer mit Förderelementen besetzten Welle. Die Förderelemente sind so angeordnet, dass ein Teil der Förderelemente das Mischgut in Förderrichtung fördern und ein weiterer Teil der Förderelemente auf derselben Welle das Mischgut in Gegenrichtung fördert.

Aus der GB 789,439 A ist ein Trockner bekannt, in welchem zu trocknendes Material von einem Eintrag zu einem Austrag gelangt, wobei ein Drehelement mit daran angeordneten scheibenförmigen Elementen die Förderung des Materials unterstützen.

### Aufgabe der Erfindung

Aufgabe der vorliegenden Erfindung ist es, eine Vorrichtung der o. g. Art zum kontrollierten Transport eines Produktes zur kontinuierlichen Durchführung von Behandlungsprozessen zu schaffen.

### Lösung der Aufgabe

Zur Lösung dieser Aufgabe führt, dass die Kammer einen Füllbereich, eine Fallzone und einen Transportbereich für das Produkt aufweist, wobei das Produkt im freien Fall in der Fallzone auf eine Auffangfläche eines Transportelements trifft, die zum Austrag gerichtet ist, wobei das Produkt durch das Auftreffen auf die Auffangfläche im Transportbereich durch einen Spalt zwischen dem Gehäuse und der Welle in die nächste Kammer geworfen wird.

Ein Torrefaktor als Beispiel für eine erfindungsgemässe Behandlungsvorrichtung ist in eine Röst- und Transport- und in eine Austragszone unterteilt. Die Röst- und Transportzone ist in mehrere Röstkammern unterteilt. Hier wird eine Biomasse einer Pyrolyse unterzogen, d.h. im wesentlichen ohne Sauerstoff.

Grundsätzlich besteht der Torrefaktor aus einem vorzugsweise zylindrischen Gehäuse, es sind aber auch alle anderen Gehäuseformen vom Erfindungsgedanken eingeschlossen, in das eine Welle eingebracht ist, die angetrieben wird. Vom Erfindungsgedanken sollen alle möglichen Ausgestaltungen der Welle, z.B als Hohlwelle oder mit beliebigem Profil, umfasst sein.

Auf der Welle sind scheibenförmige Platten oder Ringe angeordnet, die die Röstkammern bilden. Vorzugsweise sind die Scheiben mit der Welle verschweisst, vom Erfindungsgedanken sind aber auch alle andern lös- und unlösbaren Befestigungsarten umfasst. Zwischen Scheibe und Gehäuse bildet sich ein Spalt, da die Scheiben in einem kleineren Durchmesser als das Gehäuse ausgeführt sind. Auch die Scheiben können hohl sein und mit einem Heizmedium erwärmt werden.

In der Röstkammer wird das Produkt für ca. 60% einer Wellenumdrehung gehalten. Nach dem Überschreiten eines bestimmten Punktes kann das Produkt in einem Raum, der ca. 40% einer Wellenumdrehung ausmacht, frei fallen. Im freien Fall trifft das Produkt auf Transportelemente, die an den Scheiben angeordnete sind und in die Röstkammer hineinragen. Die Transportelemente sind so angeordnet und in Transportrichtung geneigt, dass das Produkt beim Auftreffen auf ein Transportelement durch den Spalt zwischen Scheibe und Gehäuse in die nächste Kammer geworfen wird. Vorzugsweise werden drei Transportelemente auf einer Scheibe angeschweisst, es ist aber auch jede andere Anzahl und Befestigungsart denkbar.

Diese einfache Ausgestaltung der Transportelemente hat sich bei normalem grobkörnigen Produkt als wirkungsvoll erwiesen, zumal, wenn diese Produkte zusammenhaften bzw. Nester bilden. In diesem Fall wird das Produkt über den Scheitelpunkt der Welle angehoben und fällt in eine Fallzone, in der die Transportelemente bzw. eine Auffangfläche der Transportelemente in Förderrichtung angestellt ist, sodass auf diese Weise das Produkt von einem Eintrag zu einem Austrag gefördert wird. Viele Produkte sind allerdings sehr feinkörnig oder es bildet sich ein erheblicher Abrieb eines grobkörnigen Produktes in dem Gehäuse der Vorrichtung, wobei dies im Wesentlichen im Füllbereich geschieht. Versuchen die Transportelemente diesen Abrieb bzw. diese feinkörnigen Produkte anzuheben und über den Scheitelpunkt der Welle zu transportieren, so gelingt dies in vielen Fällen nicht, sodass das Produkt bereits im Füllbereich von dem Transportelement fällt und auf eine Auffangfläche des nachfolgenden Transportelementes auftrifft. Diese Auffangfläche ist aber in dieser Bogenlage in die entgegengesetzte Richtung zur Förderrichtung angestellt, sodass dadurch das Produkt entgegen der Förderrichtung transportiert wird. Dies ist äusserst unerwünscht. Um dem entgegen zu wirken, sind spezielle Transportelemente entwickelt worden. Im Wesentlichen handelt es sich hierbei um ein Reibförderelement, welches entgegengesetzt der Auffangfläche (Fallförderelement) angestellt ist. Die entsprechenden Elemente können auf dem Umfang der Scheibe verteilt angeordnet sein, bevorzugt werden sie aber keilförmig zueinander angeordnet, wobei die Spitze des Keils in Förderrichtung zeigt. Dies hat den Vorteil, dass das Fallförderelement in der Fallzone das Reibförderelement, welches in der Fallzone in "falscher" Richtung angestellt wäre, abdeckt. Das gleiche gilt für das Reibförderelement gegenüber dem Fallförderelement im Füllbereich.

Vorteilhafterweise sind die Transportelemente lösbar mit der Scheibe verbunden, so dass je nach Produkteigenschaft die optimale Einstellung vorgenommen werden kann. Denkbar ist auch, dass die Transportelemente zwar fest mit der Scheibe verbunden sind, je nach Produkt aber unterschiedliche Neigungswinkel und Einstellungen möglich sind.

Aus der letzten Röstkammer wird das Produkt, wie oben beschrieben in die Austragszone geworfen. In der Austragszone sind auf der Scheibe Austragselemente in Form eines Zellenrades angeordnet. Hier erfolgt der Transport nur noch in radialer und nicht mehr in axialer Richtung entlang der Welle.

Grundsätzlich müssen die Freiräume innerhalb des Torrefaktors so gross ausgelegt sein, dass Produktteile mit Maximalgrösse keine zusammenhängenden Nester bilden können. Dadurch bleibt ein freies Fallen und damit der gezielte Transport des Produkts jederzeit möglich. Alle Element, die die Produktbewegung, Umwälzung und den Transport ermöglichen, sind so ausgebildet, dass möglichst wenig Kompaktierung und Reibung entsteht. So wird die Staub- und Abriebbildung auf ein Minimum beschränkt, ein wichtiges Kriterium für die Abgasfiltrierung. Im ganzen Produktraum muss ein Klemmen und Pressen des Produkts zwischen statischen und dynamischen Teilen und damit ein Zerkleinern desselben ausgeschlossen werden. Durch die geregelte axiale und radiale Füllgradverteilung entsteht der gewünschte optimale Gasraum, der so berechnet ist, dass die Gasströme nicht unnötige Mengen Staub mitschleppen. Damit wird die Feststoffabscheidung minimiert.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines erfindungsgemässen Torrefaktors;
Figur 2 einen schematischen Schnitt A-A entsprecht Figur 1;
Figur 3 eine Abwicklung einer Welle gemäss Figur 1;
Figur 4 einen schematischen Schnitt B-B entsprechend Figur 1;
Figur 5 eine Abwicklung einer Welle eines weiteren Ausführungsbeispiels eines Torrefaktores;
Figur 6 einen Teilausschnitt aus einer Abwicklung der Welle gemäss Figur 5 in Seitenansicht.

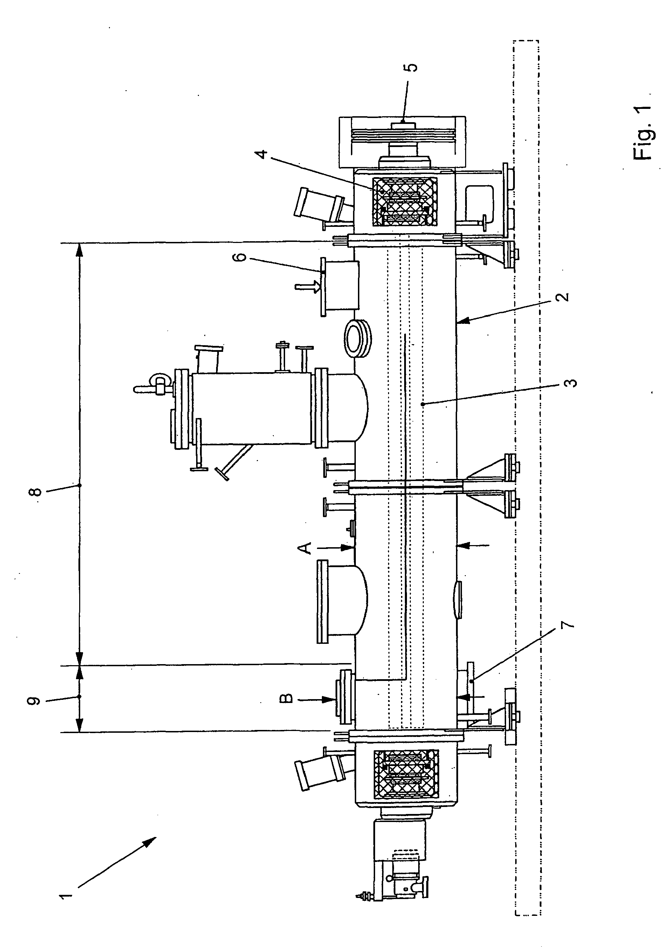

Figur 1 zeigt einen Torrefaktor 1. Dessen Gehäuse 2 ist zylinderförmig ausgebildet. In diesem befindet sich eine Welle 3. Diese wird über einen Antrieb 4, um eine Mittelachse 5 gedreht. Am Gehäuse 2 befindet sich ein Eintrag 6 und ein Austrag 7. Der Eintrag 6 ist aus einem nach oben weisenden Zylinder, der über eine Öffnung am Beginn des Gehäuses 2, auf der Seite des Antriebs 4, in das Gehäuse 2 eingesetzt ist, gebildet. Der Austrag 7 befindet sich auf der anderen Seite des Gehäuses 2. Dieser besteht aus einem nach unten weisenden, zylindrischen Bauteil, das über eine Öffnung in das Gehäuse 2 eingesetzt ist.

Das Gehäuse 2 ist in eine Röst- und Transportzone 8 und eine Austragszone 9 unterteilt. Die Röst- und Transportzone 8 beginnt am Eintrag 6 und erstreckt sich über einen Grossteil der Länge des Gehäuses 2 und die Welle 3. An das Ende der Röst- und Transportzone 8 schliesst direkt die Austragszone 9 an, darunter befindet sich der Austrag 7.

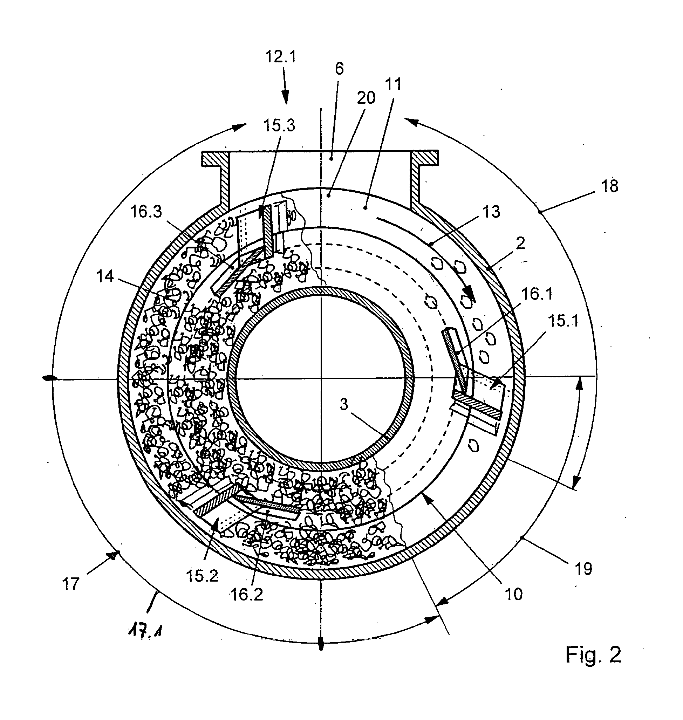

Auf der Welle 3 sind Scheiben 10 angeordnet. Diese sind in einem Durchmesser, grösser als der der Welle 3 und kleiner als der Innendurchmesser des Gehäuses 2 ausgeführt. Dadurch ergibt sich zwischen Scheibe 10 und Gehäuse 2 ein Spalt 11. Die Scheiben 10 unterteilen die Röst- und Transportzone 8 in mehrere Röstkammern 12.1, 12.2, 12.3, usw.. Eine erfindungsgemässe Röstkammer 12.1 ist einem schematischen Schnitt A-A durch das Gehäuse 2 und die Welle 3 in der Röst- und Transportzone 8 in Figur 2 gezeigt. Die Röstkammer 12.1 ist scheibenförmig.

Auf der Scheibe 10 in der Röstkammer 12.1 sind Transportelemente 15.1, 15.2 und 15.3 angeordnet. Die Transportelemente 15.1, 15.2, 15.3 ragen in die Röstkammer 12.1. An jedem Transportelement 15 befinden sich eine Auffangfläche 16. Diese Auffangflächen 16.1, 16.2 und 16.3 an den Transportelementen 15.1, 15.2 und 15.3 sind in Transportrichtung, entsprechend Figur 2 aus der Bildebene heraus geneigt.

Die Funktionsweise der vorliegende Erfindung ist folgende:
Bei Prozessbeginn wird die Welle 3 über den Antrieb 4 um die Mittelachse 5 in Drehrichtung entsprechend dem Pfeil 13 (siehe Figur 2) gedreht. Über den Eintrag 6 wird ein Produkt 14, das vorzugsweise fliessbar und Brücken bzw. Nester bildend ist und keine Wandhaftung hat, eingebracht.

Das Produkt 14 gelangt in die erste Röstkammer 12.1 der Röst- und Transportzone 8 entsprechend Figur 2. In der Röstkammer 12.1 ergibt sich ein Füllbereich 17, eine Fallzone 18 und ein Transportbereich 19. Etwa die ersten 90 ° davon können auch als Reibzone 17.1 bezeichnet werden, da hier infolge des Zusammenwirkens von statischem Gehäuse 2 und dynamischer Welle 3, Scheiben 10 und Transportelementen 15 ein Pulver-Abrieb stattfindet. Der Winkel des Füllbereichs 17 beträgt ca. 210°. Für ca. 60% einer Drehung der Welle 3 wird das Produkt 14 in diesem Bereich gehalten. Erst nach dem Überschreiten eines Hochpunktes 20 fällt das Produkt 14 in der Fallzone 18. Im freien Fall trifft das Produkt 14 auf die Auffangfläche 16.1 des Transportelements 15.1. Durch das entsprechende Anstellen der Auffangfläche wird das Produkt 14 kontrolliert durch den Spalt 11 in die nächste Röstkammer 12.2 geworfen. Der Übergang in die nächste Röstkammer 12.1 findet im Transportbereich 19 statt. Das bedeutet, dass die eigentliche Förderung des Produktes beim Fallen stattfindet.

Grundsätzlich muss darauf geachtet werden, dass zwischen statischen und dynamischen Teilen ein Einklemmen und Pressen und damit verbundenes Zerkleinern des Produkts verhindert wird. Durch die geregelte axiale und radiale Füllgradverteilung entsteht der gewünschte optimale Gasraum, der so berechnet ist, dass die Gasströme nicht unnötige Mengen Staub mitschleppen. Damit wird die Faserstoffabscheidung minimiert.

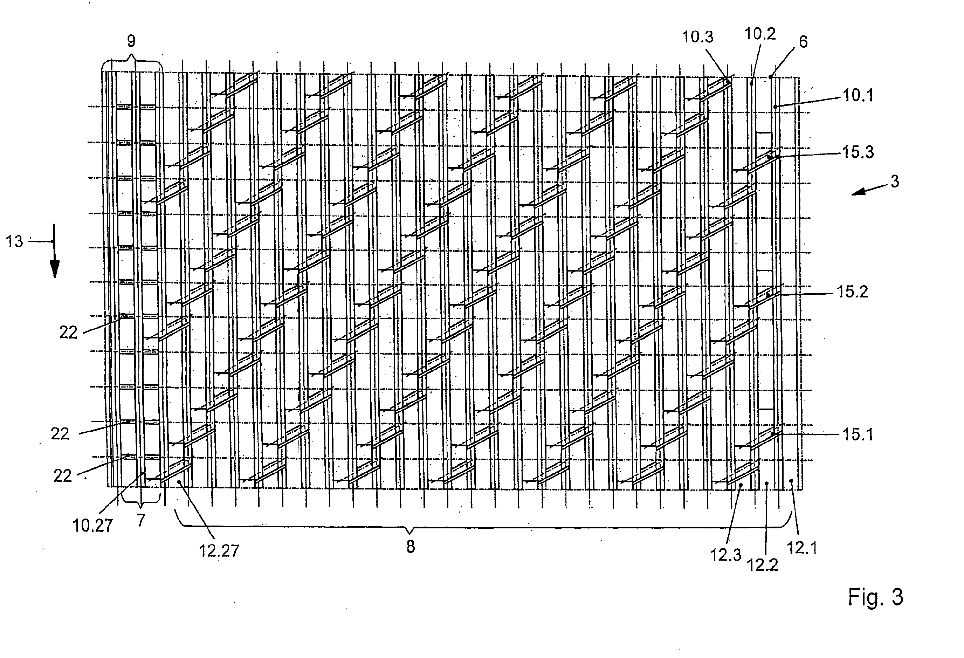

Die Anordnung der Röstkammern 12.1, 12.2, 12.3, und 12.27 geht aus der Wellenabwicklung 21 in Figur 3 hervor. Der oben beschriebene Ablauf wiederholt sich entsprechend für alle in der Wellenabwicklung 21 gezeigten Röstkammern der Röst- und Transportzone 8, bis das Produkt 14 aus der letzten Röstkammer 12.27 in die Austragszone 9 geworfen wird.

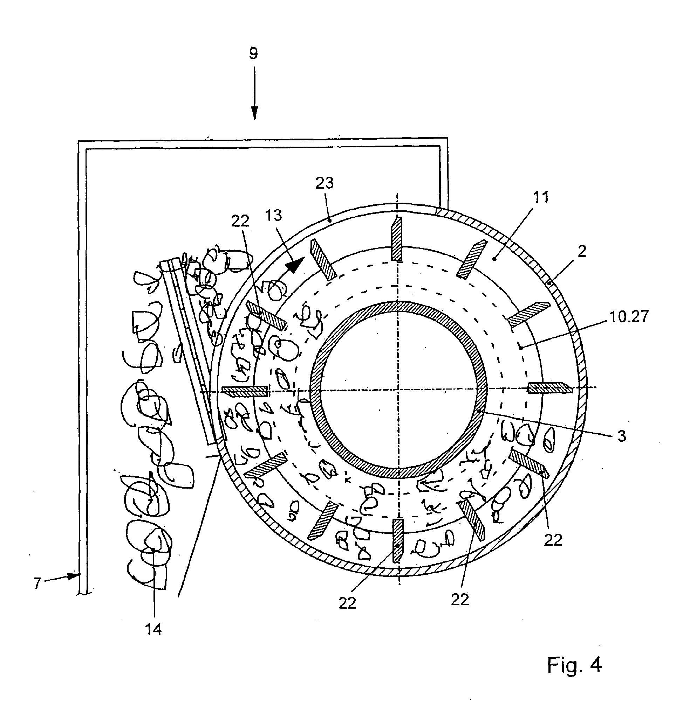

Figur 4 zeigt einen Schnitt B-B durch das Gehäuse 2 und die Welle 3 in der Austragszone 9. In der Austragszone 9 sind Austragselemente 22 so auf der Scheibe 10.27 angeordnet, dass die Austragszone 9 entsprechend einem Zellenrad ausgebildet ist. Dadurch findet der Transport nicht mehr entlang der Welle 3, sondern nur noch in Drehrichtung 13 bis zu einer Austragsöffnung 23 statt. Durch die Austragsöffnung fällt das Produkt aus der Austragszone 9 und dem Gehäuse 2 des Torrefaktors 1.

Wie schon in den Röstkammern, muss auch bei der Anordnung der Austragselemente 22 darauf geachtet werden, dass keine Verklemmstellen im Zusammenhang mit einer Austragsöffnung 23 entstehen können. Das Produkt 14 wird dadurch nicht gepresst, sondern locker und ohne zusätzlichen ungewünschten Abrieb, der zu Staubentwicklung führt, über den Austrag ausgetragen.

In Figur 4 ist im übrigen zu erkennen, dass sich der Austrag bzw. das Austragsgehäuse eigentlich auf der falschen Seite befindet. Der Austrag 7 ist dort positioniert, wo das Produkt ansteigt. Das bedeutet, dass das Produkt mittels der Austragselemente 22 geschoben und angehoben wird, so dass keinerlei Scheren oder Klemmen stattfindet, was bei einem Röstprodukt unerwünscht ist. Zu diesem Zweck erstreckt sich das Gehäuse des Austrags 7 auch bis über den Scheitel des Gehäuses 2, so dass sich eine sehr grosse Austragsöffnung ergibt, in der ebenfalls keinerlei Klemmen oder Scheren des Produktes stattfinden kann.

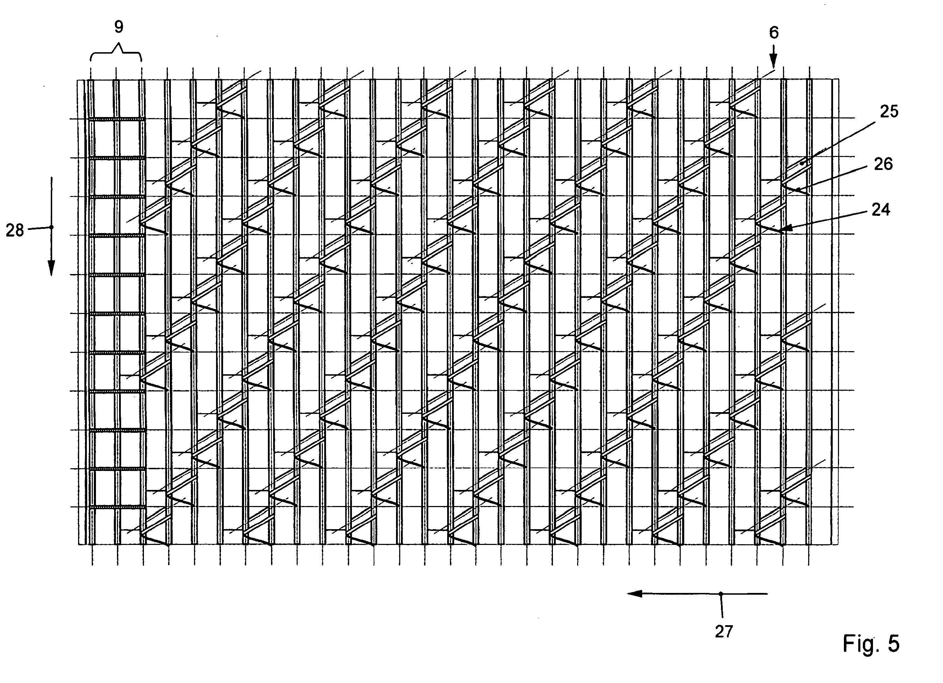

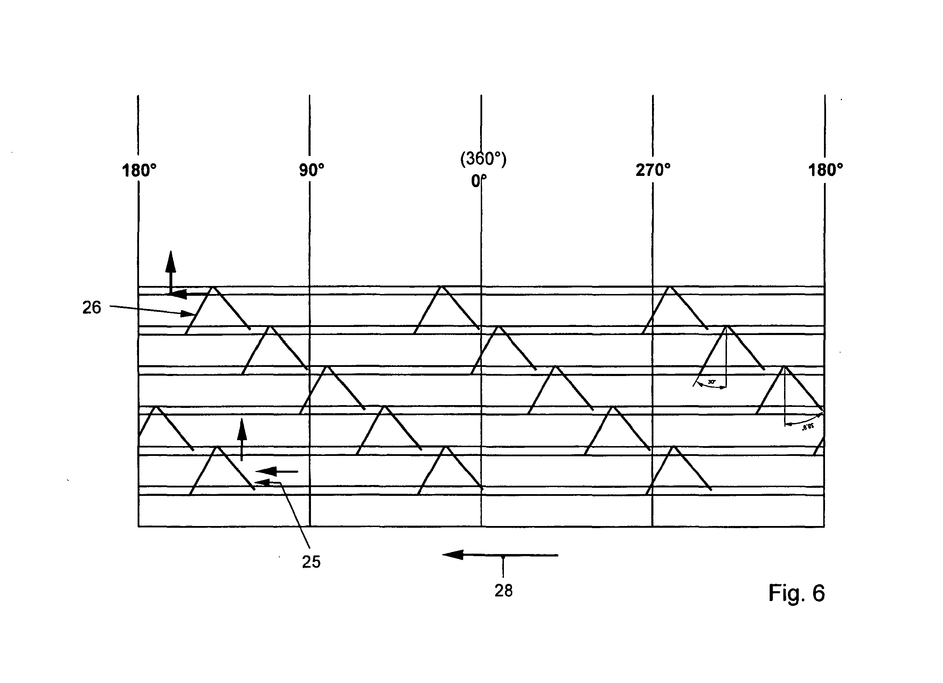

In Figur 5 und 6 wird eine weitere Abwicklung einer Welle eines weiteren Ausführungsbeispiels eines Torrefaktors gezeigt. In der Praxis hat sich herausgestellt, dass das erste Ausführungsbeispiel sehr gut bei relativ groben und schweren Produkt arbeitet, insbesondere wenn das Produkt Nester bildet. Das Produkt wird in diesem Fall gesichert über den Hochpunkt 20 gehoben und in die Fallzone 18 transportiert, von wo es in Transportrichtung weiter geleitet wird. Schwierigkeit ergeben sich aber bei Produkten mit einer relativ feinen Körnung und insbesondere natürlich auch bei einem Abrieb der ansonsten ordnungsgemäss transportierten Produkte. Diese werden von den Transportelementen nicht über den Hochpunkt 20 gehoben, sondern fallen im Füllbereich 17 immer wieder zurück und dort vor allem auf nachfolgende Transportelemente 15. Da diese aber nun entgegengesetzt zu der Fallzone 18 bzw. zum Transportbereich 19 angestellt sind, erfolgt ein Transport dieser feinen Körnung entgegen der gewünschten Transportrichtung. Das heisst, die Welle 3 fördert diesen Abrieb rückwärts.

Um dies zu verhindern sind die Transportelement gemäss Figur 5 und 6 keilförmig ausgebildet. Das heisst, jedes Transportelement 24 ist aufgeteilt in ein Element 25 für Fallförderung und ein Element 26 für Reibförderung, beispielsweise für Pulver - Abrieb. Damit wird gewährleistet, dass sowohl das Hauptprodukt als auch beispielsweise der Abrieb davon in Förderrichtung 27 transportiert wird. Die Drehrichtung ist mit 28 gekennzeichnet. Aus den Figuren ist erkennbar, dass die Reibförderelemente 26 "positiv" zur Transportrichtung und Drehrichtung gestellt sind, während die Fallförderelemente 25 "negativ" zur Transportrichtung und Drehrichtung gestellt sind.

**Bezugszeichenliste**

| | | | | | |
|---|---|---|---|---|---|
| 1 | Torrefaktor | 34 | | 67 | |
| 2 | Gehäuse | 35 | | 68 | |
| 3 | Welle | 36 | | 69 | |
| 4 | Antrieb | 37 | | 70 | |
| 5 | Mittellachse | 38 | | 71 | |
| 6 | Eintrag | 39 | | 72 | |
| 7 | Austrag | 40 | | 73 | |
| 8 | Röst- und Transportzone | 41 | | 74 | |
| 9 | Austragszone | 42 | | 75 | |
| 10 | Scheibe | 43 | | 76 | |
| 11 | Spalt | 44 | | 77 | |
| 12 | Röstkammer | 45 | | 78 | |
| 13 | Pfeil | 46 | | 79 | |
| 14 | Produkt | 47 | | | |
| 15 | Transportelement | 48 | | | |
| 16 | Auffangfläche | 49 | | | |
| 17 | Füllbereich | 50 | | | |
| 18 | Fallzone | 51 | | | |
| 19 | Transportbereich | 52 | | | |
| 20 | Hochpunkt | 53 | | | |
| 21 | Wellenabwicklung | 54 | | | |
| 22 | Austragselement | 55 | | | |
| 23 | Austragsöffnung | 56 | | | |
| 24 | Transportelement | 57 | | | |
| 25 | Element für Fallförderung | 58 | | | |
| 26 | Element für Reibförderung | 59 | | | |
| 27 | Förderrichtung | 60 | | | |
| 28 | Drehrichtung | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zur Behandlung eines Produktes, welches in einem Gehäuse (2) von einem Eintrag (6) zu einem Austrag (7) transportierbar ist, insbesondere Torrefaktor zur Durchführung eines Röstprozesses mit einem schwer fliessbaren Produkt (14), das Nester bildet und keine Wandhaftung hat, wobei Kammern (12.1, 12.2, 12.3, 12.27) durch scheibenförmige Elemente (10) gebildet sind, die auf einer Welle (3) angeordnet sind,
**dadurch gekennzeichnet,**
**dass** mindestens eine Kammer (12.1, 12.2, 12,3, 12.27) einen Füllbereich (17), eine Fallzone (18) und einen Transportbereich (19) für das Produkt (14) aufweist, wobei das Produkt (14) im freien Fall in der Fallzone (18) auf eine Auffangfläche (16, 25) eines Transportelements (15, 24) trifft, die zum Austrag (7) gerichtet ist, wobei das Produkt (14) durch das Auftreffen auf die Auffangfläche (16, 25) im Transportbereich (19) durch einen Spalt (11) zwischen dem Gehäuse (2) und der Welle (3) in die nächste Kammer geworfen wird.

2. Vorrichtung nach Anspruch 1, **dadurch gekennzeichnet, dass** eine Austragszone (9) durch die scheibenförmigen Elemente (10) gebildet ist, die auf einer Welle (3) angeordnet sind.

3. Vorrichtung nach Anspruch 1 oder 2, **dadurch gekennzeichnet, dass** auf den scheibenförmigen Elementen (10) in einer Röst- und Transportzone (8) mindestens ein, vorzugsweise drei Transportelemente (15, 24) angeordnet ist/sind.

4. Vorrichtung nach einem der Ansprüche 1 bis 3, **dadurch gekennzeichnet, dass** das Transportelement (15, 24) mindestens eine Auffangfläche (16, 25) aufweist.

5. Vorrichtung nach wenigstens einem der Ansprüche 1 bis 4, **dadurch gekennzeichnet, dass** die Auffangfläche (16, 25) in Transportrichtung geneigt ist.

6. Vorrichtung nach wenigstens einem der Ansprüche 1 bis 5, **dadurch gekennzeichnet, dass** der Auffangfläche (25) ein Reibförderelement (26) zugeordnet ist.

7. Vorrichtung nach Anspruch 6, **dadurch gekennzeichnet, dass** die Auffangfläche (Fallförderelement 25) und das Reibförderelement (26) keilförmig zueinander angeordnet sind.

8. Vorrichtung nach Anspruch 7, **dadurch gekennzeichnet, dass** die Spitze des keilförmigen Transportelementes (24) in Förderrichtung (27) zeigt.

9. Vorrichtung nach wenigstens einem der Ansprüche 6 bis 8, **dadurch gekennzeichnet, dass** das Produkt und der Abrieb im Füllbereich in Förderrichtung transportiert wird.

10. Vorrichtung nach wenigstens einem der Ansprüche 1 bis 9, **dadurch gekennzeichnet, dass** das Produkt (14) für ca. 60% einer Drehung der Welle (3) im Füllbereich (17) gehalten wird.

11. Vorrichtung nach wenigstens einem der Ansprüche 2 bis 10, **dadurch gekennzeichnet, dass** auf dem scheibenförmigen Element (10) in der Austragszone (9) mindestens ein Austragselement (22) angeordnet ist.

12. Vorrichtung nach Anspruch 11, **dadurch gekennzeichnet, dass** die Austragselemente (22) in der Austragszone (9) entsprechend einem Zellenradius angeordnet sind.

13. Vorrichtung nach Anspruch 11 oder 12, **dadurch gekennzeichnet, dass** in der Austragszone (9) der Austrag (7) an einer Position angeordnet ist, an der das Produkt durch die Austragselemente (22) angehoben und ausgetragen wird.

14. Verwendung von drehbaren scheibenförmigen Elementen (10) und darauf angeordneten Transportelementen (15, 24) mit in Transportrichtung geneigten Auffangflächen (16) zum Transport eines Produktes (14) durch einen Spalt (11) zwischen scheibenförmigen Element (10) und einem Gehäuse (2).

## Claims

1. Device for treating a product which can be transported in a housing (2) from an input (6) to an output (7), in particular a torrefier for carrying out a torrefying process with a poorly flowing product (14) which forms clusters and has no wall adhesion, chambers (12.1, 12.2, 12.3, 12.27) being formed by disc-shaped elements (10) which are arranged on a shaft (3),
**characterised**
**in that** chamber (12.1, 12.2, 12.3, 12.27) has a filling region (17), a falling zone (18) and a transporting region (19) for the product (14), the product (14) in free-fall in the falling zone (18) hitting a catching surface (16, 25) of a transporting element (15, 24) which is directed towards the output (7), and the product (14) by hitting the catching surface (16, 25) being thrown in the transporting region (19) through a gap (11) between the housing (2) and the shaft (3) into the next chamber.

2. Device according to Claim 1, **characterised in that** an output zone (9) is formed by disc-shaped elements (10) which are arranged on a shaft (3).

3. Device according to Claim 1 or 2, **characterised in that** at least one, preferably three transporting elements (15, 24) is/are arranged on the disc-shaped elements (10) in a torrefying and transporting zone (8).

4. Device according to one of Claims 1 to 3, **characterised in that** the transporting element (15, 24) has at least one catching surface (16, 25).

5. Device according to at least one of Claims 1 to 4, **characterised in that** the catching surface (16, 25) is inclined in the transporting direction.

6. Device according to at least one of Claims 1 to 5, **characterised in that** the catching surface (25) is assigned a friction conveying element (26).

7. Device according to Claim 6, **characterised in that** the catching surface (gravity conveying element 25) and the friction conveying element (26) are arranged in a wedge-shaped manner with respect to one another.

8. Device according to Claim 7, **characterised in that** the tip of the wedge-shaped transporting element (24) points in the conveying direction (27).

9. Device according to at least one of Claims 6 to 8, **characterised in that** the product and the abraded material in the filling region is transported in the conveying direction.

10. Device according to at least one of Claims 1 to 9, **characterised in that** the product (14) is held in the filling region (17) for approximately 60% of a rotation of the shaft (3).

11. Device according to at least one of Claims 2 to 10, **characterised in that** at least one output element (22) is arranged on the disc-shaped element (10) in the output zone (9).

12. Device according to Claim 11, **characterised in that** the output elements (22) are arranged in the output zone (9) in a manner corresponding to a cell wheel.

13. Device according to Claim 11 or 12, **characterised in that** in the output zone (9) the output (7) is arranged at a position at which the product is lifted and discharged by the output elements (22).

14. Use of rotatable disc-shaped elements (10) and transporting elements (15, 24) arranged thereon and having catching surfaces (16) inclined in the transporting direction for transporting a product (14) through a gap (11) between disc-shaped element (10) and a housing (2).

## Revendications

1. Dispositif pour le traitement d'un produit qui peut être transporté dans un boîtier (2) d'une alimentation (6) vers une évacuation (7), en particulier un torréfacteur pour la mise en oeuvre d'un processus de torréfaction avec un produit peu fluide (14) qui forme des nids et ne présente pas d'adhérence à la paroi, des chambres (12.1, 12.2, 12.3, 12.27) étant formées par des éléments en forme de disque (10) disposés sur un arbre (3),
**caractérisé par le fait**
**qu'**au moins une chambre (12.1, 12.2, 12.3, 12.27) présente une zone de remplissage (17), une zone de chute (18) et une zone de transport (19) du produit (14), le produit (14) heurtant en chute libre dans la zone de chute (18) une zone collectrice (16, 25) d'un élément de transport (15, 24) orientée vers l'évacuation (7), le produit (14) étant lancé par le heurt sur la surface collectrice (16, 25) dans la zone de transport (19), à travers un interstice (11) entre le boîtier (2) et l'arbre (3), dans la chambre suivante.

2. Dispositif selon la revendication 1, **caractérisé par le fait qu'**une zone d'évacuation (9) est formée par les éléments en forme de disque (10) qui sont disposés sur un arbre (3).

3. Dispositif selon la revendication 1 ou 2, **caractérisé par le fait que** sur les éléments en forme de disque (10) est/sont disposés dans une zone de torréfaction et de transport (8) au moins un, de préférence trois éléments de transport (15, 24).

4. Dispositif selon l'une des revendications 1 à 3, **caractérisé par le fait que** l'élément de transport (15, 24) présente au moins une surface collectrice (16, 25).

5. Dispositif selon l'une des revendications 1 à 4, **caractérisé par le fait que** la surface collectrice (16, 25) est inclinée dans la direction de transport.

6. Dispositif selon l'une des revendications 1 à 5, **caractérisé par le fait qu'**à la surface collectrice (25) est associé un élément de transport à friction (26).

7. Dispositif selon la revendication 6, **caractérisé par le fait que** la surface collectrice (élément de transport à chute 25) et l'élément de transport à friction (26) sont disposés en forme de coin l'un par rapport à l'autre.

8. Dispositif selon la revendication 7, **caractérisé par le fait que** la pointe de l'élément de transport en forme de coin (24) est orientée dans la direction de transport (27).

9. Dispositif selon l'une des revendications 6 à 8, **caractérisé par le fait que** le produit et l'abrasion dans la zone de remplissage sont transportés dans la direction de transport.

10. Dispositif selon l'une des revendications 1 à 9, **caractérisé par le fait que** le produit (14) est maintenu pendant environ 60% d'une rotation de l'arbre (3) dans la zone de remplissage (17).

11. Dispositif selon l'une des revendications 2 à 10, **caractérisé par le fait que** sur l'élément en forme de disque (10) dans la zone d'évacuation (9) est disposé au moins un élément d'évacuation (22).

12. Dispositif selon la revendication 11, **caractérisé par le fait que** les éléments d'évacuation (22) sont disposés dans la zone d'évacuation (9) selon un rayon de cellule.

13. Dispositif selon la revendication 11 ou 12, **caractérisé par le fait que** dans la zone d'évacuation (9) l'évacuation (7) est disposée à une position où le produit est soulevé et évacué par les éléments d'évacuation (22).

14. Utilisation d'éléments en forme de disques rotatifs (10) et d'éléments de transport (15, 24) disposés sur ces derniers avec des surfaces collectrices (16) inclinées dans la direction de transport pour transporter un produit (14) à travers un interstice (11) entre l'élément en forme de disque (10) et un boîtier (2).
